# FASCICULE DE BREVET EUROPEEN

(11) **EP 0 830 462 B1**
(45) Date de publication et mention de la délivrance du brevet: **27.02.2002**
(21) Numéro de dépôt: 96932633.9
(22) Date de dépôt: 23.09.1996
(51) Int. Cl.: C21D 9/02, F16F 1/06

(54) **PROCEDE DE FABRICATION DE RESSORTS HELICOIDAUX COURBES, RESSORTS AINSI OBTENUS ET DISPOSITIFS POUR LA MISE EN OEUVRE DU PROCEDE**
VERFAHREN UND VORRICHTUNG ZUR HERSTELLUNG EINER SCHRAUBENFEDER UND SCHRAUBENFEDER
METHOD FOR MAKING ARCUATE COIL SPRINGS, RESULTING SPRINGS AND DEVICES FOR CARRYING OUT THE METHOD

(30) Priorité: 22.09.1995 FR 9511138
(43) Date de publication de la demande: 25.03.1998
(73) Titulaire: ALLEVARD REJNA AUTOSUSPENSIONS, 92210 Saint-Cloud (FR)
(72) Inventeur: COFRADE, Stanislas, F-52300 Joinville (FR); BOUDIER, Pascal, F-55170 Cousances-les-Forges (FR)
(74) Mandataire: Chambon, Gérard
(86) Numéro de dépôt international: FR9601479
(87) Numéro de publication internationale: WO9711201

(56) Documents cités:
- EP-A- 0 584 474
- WO-A-91/06785
- US-A- 4 245 819
- US-A- 4 938 811
- PATENT ABSTRACTS OF JAPAN vol. 014, no. 270 (C-0727), 12 Juin 1990 & JP 02 080543 A (HITACHI METALS LTD), 20 Mars 1990,

## Description

L'invention concerne un procédé de fabrication de ressorts hélicoïdaux courbes, les ressorts ainsi obtenus et les dispositifs nécessaires pour la mise en oeuvre de ce procédé.

Les ressorts hélicoïdaux courbes sont utilisés dans de nombreux systèmes mécaniques qui requièrent notamment des effets de rappels et/ou d'emmagasinage et de restitution d'énergie comme, par exemple, dans les mécanismes d'embrayage dits "double volant amortisseur" ou les boîtes de vitesses automatiques, les suspensions de véhicules, etc.

Il est connu de fabriquer de tels ressorts courbes par des procédés qui consistent essentiellement en une déformation au-delà de la limite élastique des spires des ressorts préalablement enroulés droits.

Cette déformation ou cintrage est généralement effectuée du côté qui constituera la partie extérieure convexe des ressorts, au moyen de pièces coniques ou en coin, qui sont introduites entre les spires.

De nombreuses opérations sont bien sûr prévues en amont et en aval de cette opération de cintrage.

Avant le cintrage, il est par exemple connu d'effectuer un enroulage droit des ressorts, une phase de revenu (dit de détente), le meulage des extrémités, un grenaillage de précontrainte des ressorts droits, un chauffage et un blocage à spires jointives et à chaud.

En outre, après le cintrage mécanique précité, les ressorts sont stabilisés à chaud et ils sont ensuite tarés, c'est-à-dire contrôlés en couple sous une déformation angulaire donnée, puis éventuellement traités anticorrosion.

Un tel procédé présente toutefois l'inconvénient de provoquer à la surface du fil du ressort, des marques du fait même de l'opération de cintrage telle que mentionnée, marques qui peuvent constituer des amorces de rupture.

Des variantes au procédé précité peuvent être apportées dans l'ordre des opérations. C'est ainsi, par exemple, que le cintrage effectué de la manière précitée peut être réalisé juste après les opérations d'enroulage, de revenu et de meulage, pour être suivi du chauffage, du blocage à spires jointives et à chaud, du grenaillage et d'un nouveau chauffage, pour finir par le tarage et le revêtement éventuel anticorrosion.

Toutefois, si un grenaillage après le cintrage permet d'effacer les traces dudit cintrage, les amorces de rupture demeurent.

Il a aussi été imaginé d'effectuer un cintrage des ressorts droits pendant un traitement thermique, comme décrit par exemple dans le document WO-A-9106785 ou le EP 0 584 474. Dans ce dernier document, le ressort subit un pressage à chaud à la température d'enroulage.

Or, quel que soit le procédé mentionné ci-avant, du fait notamment d'une opération ultérieure de grenaillage, les ressorts ne conservent pas une bonne planéité (c'est-à-dire un bon contact à plat d'une génératrice du ressort courbe sur un plan) du fait des contraintes introduites par ledit grenaillage.

C'est pourquoi l'inventeur a imaginé un procédé original de cintrage, un ordre différent des opérations au moyen en outre de dispositifs spécifiques.

Le procédé selon l'invention, pour la fabrication de ressorts hélicoïdaux courbes à partir de ressorts hélicoïdaux droits et comportant notamment une phase de cintrage desdits ressorts droits pendant un traitement thermique, est remarquable en ce que pour le cintrage, les ressorts sont maintenus cambrés en leur donnant sensiblement la forme d'une partie de spire d'hélice pour procurer un contre-défaut au ressort avant les opérations ultérieures de finition.

De manière tout à fait avantageuse, le traitement thermique effectué pendant le cintrage correspond à une opération de revenu de détente contrairement notamment au document précité EP 0 584 474.

Avantageusement aussi, le maintien en position cambrée des ressorts est obtenu par blocage d'au moins les spires d'extrémités desdits ressorts.

Un tel procédé permet entre autre d'obtenir une bonne planéité du ressort une fois terminé.

De préférence, la température de revenu est d'environ 350 à 450° C et la durée en position maintenue d'environ quatre à cent vingts minutes.

D'autres opérations sont évidemment prévues avant et après le cintrage et c'est ainsi par exemple que ladite opération de cintrage est généralement précédée par une opération de meulage des spires d'extrémités des ressorts droits et éventuellement par une première opération de chauffage des ressorts droits à une température d'environ 180 à 220° C pendant vingt à quarante minutes environ.

Après l'opération de cintrage, on peut prévoir les opérations successives suivantes: grenaillage de précontrainte, chauffage et blocage à spires jointives et à chaud, contrôle des couples de tarage, éventuellement complétées par une opération de revêtement anticorrosion.

L'invention concerne bien entendu aussi un ressort hélicoïdal courbe, fabriqué selon le procédé précité.

Afin de mettre en oeuvre le procédé, l'invention prévoit un dispositif qui est remarquable en ce qu'il comporte des moyens de blocage d'au moins les spires d'extrémités des ressorts qui permettent un blocage décalé desdites spires pour donner au ressort la forme sensiblement d'une partie de spire d'hélice.

Le dispositif peut se présenter sous la forme d'un boitier annulaire cylindrique dans lequel chaque ressort est introduit pour être maintenu cambré sur sensiblement toute sa longueur ou encore sous la forme d'un support pourvu de moyens d'accrochage pour les spires d'extrémités des ressorts.

Selon une variante, il peut aussi se présenter sous la forme d'une épingle non rectiligne, dont les extrémités sont destinées à être introduites dans les spires d'extrémités des ressorts ou encore sous la forme d'une épingle en deux parties dont les extrémités d'un côté desdites parties sont destinées à être introduites dans les spires d'extrémités des ressorts tandis que leurs autres extrémités libres peuvent être reliées entre elles par un organe d'accrochage.

De préférence, les dispositifs sont métalliques et traités thermiquement.

L'invention sera bien comprise et d'autres particularités apparaîtront à la lecture de la description qui va suivre et qui se réfère aux dessins annexés dans lesquels:
- La figure 1 montre en vue de dessus un dispositif selon l'invention, sous la forme d'un boîtier annulaire,
- la figure 2 est une coupe selon II-II de la figure 1,
- la figure 3 montre un autre dispositif sous la forme d'un support pour les extrémités des ressorts,
- la figure 4 montre un mode de réalisation sous la forme d'une variante de la figure 3,
- la figure 5 montre un dispositif sous la forme d'une épingle non rectiligne,
- la figure 6 montre un dispositif sous la forme d'une épingle en deux parties distinctes,

Le procédé complet et avantageux selon l'invention consiste donc après l'enroulage de chaque ressort droit à: meuler chaque extrémité du ressort, à cintrer le ressort comme il sera expliqué ci-après, au cours même de la phase de revenu à une température comprise entre 350 et 450° C et pendant une durée de quatre à cent vingts minutes, à effectuer ensuite un grenaillage de précontrainte des ressorts courbes en une seule ou deux opérations, à chauffer de nouveau à des températures d'environ 180 à 280° C, puis à bloquer le ressort à spires jointives (en comprimant le ressort courbe) et à la température précitée, puis à contrôler les couples de tarage et éventuellement, à prévoir un revêtement anticorrosion.

Comme déjà dit aussi, une opération de chauffage (ou revenu de détente) peut être effectuée à une température de 180 à 220° C pendant vingt à quarante minutes environ avant l'opération de cintrage et plus précisément entre l'opération d'enroulage et l'opération de meulage.

L'opération de cintrage est donc effectuée pendant la phase de revenu dans les conditions précitées, en maintenant les ressorts en position cambrée et avantageusement, en bloquant au moins les spires d'extrémités des ressorts.

A cet effet, plusieurs dispositifs ont été imaginés par l'inventeur, dont au moins certains sont représentés sur les dessins. Ces dispositifs sont aménagés pour bloquer au moins les extrémités des ressorts avec un décalage ou désalignement de celles-ci.

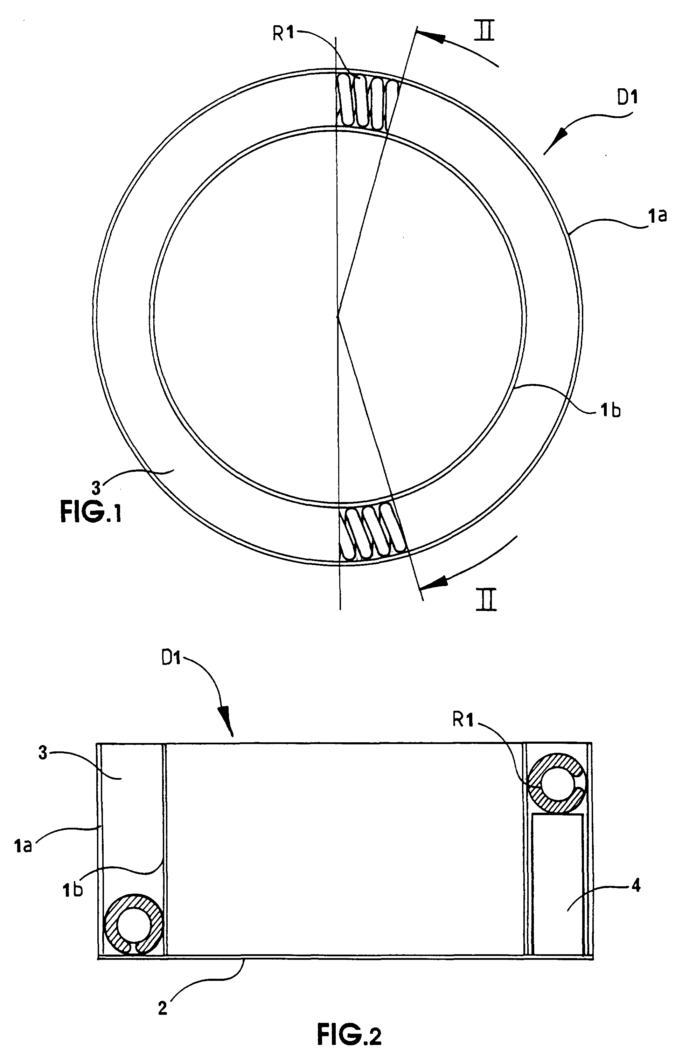

Les figures 1 et 2 montrent un premier dispositif D₁ sous la forme d'un boîtier constitué de deux tubes 1a, 1b concentriques, reliés entre eux par un fond 2 (figure 2) et ménageant entre eux un espace annulaire 3 prévu pour recevoir un ressort R₁.

Il est clair que l'espace annulaire précité est calculé en fonction du diamètre des ressorts à recevoir.

Chaque ressort peut être introduit par le dessus quand on regarde la figure 2, lequel dessus peut éventuellement être pourvu d'un couvercle.

Afin de créer un contre-défaut comme mentionné ci-avant, on peut prévoir, par exemple, une cale 4 (figure 2) de manière à donner audit ressort la forme d'une partie d'hélice.

Le boîtier ou dispositif D₁ est représenté de forme circulaire mais il pourrait être ovale.

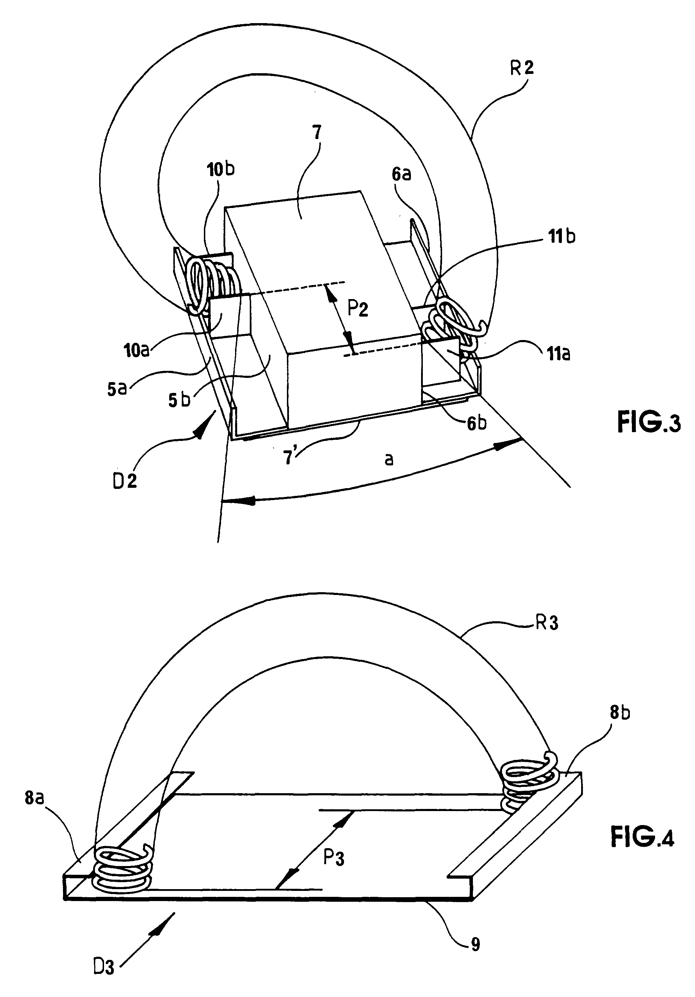

Les dispositifs D₂ et D₃ des figures 3 et 4 sont des supports pourvus de moyens d'accrochage pour les spires d'extrémités des ressorts qui sont référencés ici R₂ et R₃.

Les moyens d'accrochage sont, par exemple, constitués par des parois parallèles (elles pourraient être légèrement obliques entre elles) telles que 5a, 5b; 6a, 6b (figure 3) et 8a, 8b; 9 (figure 4), entre lesquelles la ou les (par exemple deux) spires d'extrémités sont accrochées comme le montrent les dessins.

Pour le dispositif D₂, des parois latérales 10a, 10b; 11a, 11b sont en outre prévues, le tout à partir, ici, d'une tôle pliée 7 éventuellement pourvue d'un fond 7'.

On peut remarquer que comme précédemment, on crée un contre-défaut en donnant une forme d'hélice au ressort en décalant les extrémités, ici d'une valeur P₂ pour D₂ et P₃ pour D₃.

Par ailleurs, on peut constater qu'avec le dispositif D₂ de la figure 3, les deux extrémités meulées du ressort R₂ font entre elles un angle "a" qui est fonction de la géométrie souhaitée pour le ressort fini tandis que dans le dispositif D₃ de la figure 4, les extrémités du ressort R₃ sont parallèles en étant en appui sur la même paroi 9.

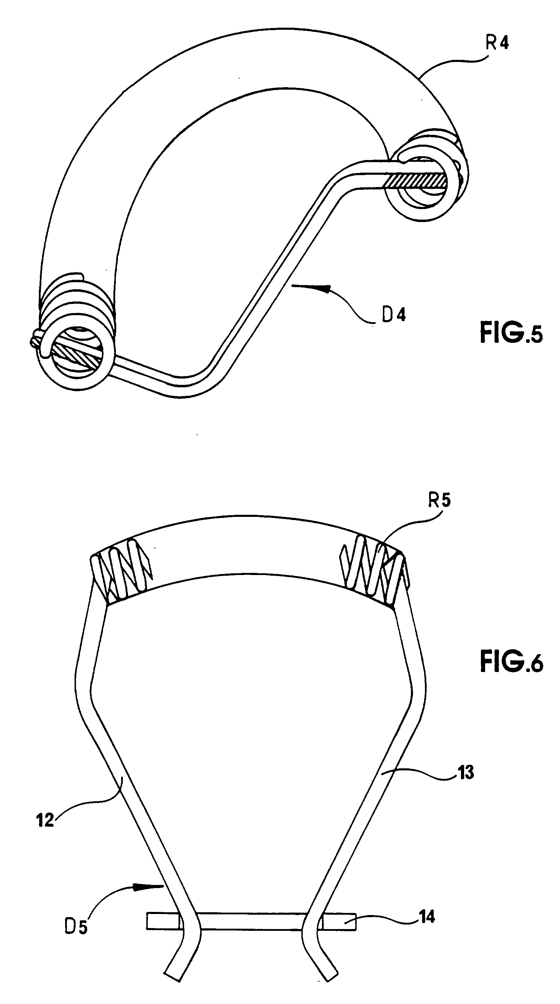

Sur la figure 5, on peut voir un dispositif D₄ sous la forme d'une épingle non rectiligne et de forme appropriée pour donner au ressort R₄ la forme désirée (cambrage et forme d'hélice).

L'épingle D₄ présente ici une section carrée tandis que chaque extrémité est prévue pour s'accrocher dans une ou deux spires d'extrémités du ressort R₄.

L'épingle D₄ exerce ainsi sur les extrémités du ressort R₄ un couple sur une ou deux spires selon un axe constitué par un diamètre de la spire d'extrémité.

Le dispositif D₅ de la figure 6 pour un ressort R₅ est une épingle en deux parties distinctes 12, 13.

L'une des extrémités de chaque partie 12, 13 est prévue comme précédemment pour venir en prise avec une ou deux spires du ressort R₅ tandis que les autres extrémités sont prévues pour être reliées entre elles de manière libérable au moyen d'un organe d'accrochage 14, ici sous la forme d'un simple anneau, de telle sorte que l'on puisse installer et retirer facilement le ressort R₅ du dispositif D₅.

Ce dernier dispositif est plus particulièrement destiné aux ressorts assez courts et de grand rayon de courbure.

Pour faciliter la mise en place des ressorts dans les dispositifs, un appareil automatique peut être utilisé pour courber lesdits ressorts, ce dispositif comportant, par exemple, un vérin rotatif qui suit un développé en forme d'hélice.

Les dispositifs ou outils précités doivent bien sûr avoir la résistance et les dimensions requises pour permettre une bonne reproductibilité des produits finis, ceux-ci pouvant être de préférence en métal avec une bonne résitance mécanique acquise par un traitement thermique adéquat.

Il est clair aussi que les divers paramètres du procédé décrit ci-avant ainsi que les dimensions et formes des dispositifs pour sa mise en oeuvre sont déterminés en fonction des caractéristiques des ressorts courbes à obtenir.

## Revendications

1. Procédé de fabrication de ressorts hélicoïdaux courbes à partir de ressorts hélicoïdaux droits et comportant notamment une phase de cintrage desdits ressorts droits pendant un traitement thermique, **caractérisé en ce que** pour le cintrage, les ressorts sont maintenus cambrés en leur donnant sensiblement la forme d'une partie de spire d'hélice pour procurer un contre-défaut au ressort avant les opérations ultérieures de finition.

2. Procédé selon la revendication 1, **caractérisé en ce que** le traitement thermique effectué pendant le cintrage, correspond à une opération de revenu de détente.

3. Procédé selon l'une des revendications 1 et 2, **caractérisé en ce que** le maintien en position cambrée des ressorts est obtenu par blocage d'au moins les spires d'extrémités desdits ressorts.

4. Procédé selon l'une des revendications 2 et 3, **caractérisé en ce que** la température de revenu est d'environ 350 à 450° C.

5. Procédé selon l'une des revendications 2 à 4, **caractérisé en ce que** la durée de la phase de revenu en position maintenue est d'environ quatre à cent vingts minutes.

6. Procédé selon l'une des revendications 1 à 5, **caractérisé en ce que** l'opération de cintrage est précédée par une opération de meulage des spires d'extrémités des ressorts droits.

7. Procédé selon l'une des revendications 1 à 6, **caractérisé en ce que** l'opération de cintrage est précédée par une première opération de chauffage des ressorts droits.

8. Procédé selon la revendication 7, **caractérisé en ce que** cette première opération de chauffage est effectuée à une température d'environ 180 à 220° C pendant vingt à quarante minutes environ.

9. Procédé selon l'une des revendications 1 à 8, **caractérisé en ce que** l'opération de cintrage est complétée par les opérations successives suivantes: grenaillage de précontrainte, chauffage et blocage à spires jointives et à chaud, contrôle des couples de tarage.

10. Procédé selon la revendication 9, **caractérisé en ce qu'**il est complété par une opération de revêtement anticorrosion.

11. Dispositif pour la mise en oeuvre du procédé selon l'une des revendications 1 à 10, **caractérisé en ce qu'**il comporte des moyens de blocage d'au moins les spires d'extrémités des ressorts, destinés à assurer un blocage décalé desdites spires pendant le cintrage et pour donner au ressort la forme sensiblement d'une partie de spire d'hélice.

12. Dispositif selon la revendication 11, **caractérisé en ce qu'**il se présente sous la forme d'un boîtier annulaire (D₁) cylindrique dans lequel chaque ressort (R₁) est introduit pour être maintenu cambré sur sensiblement toute sa longueur, tandis qu'un moyen (4) est prévu pour assurer le décalage d'au moins les spires d'extrémités.

13. Dispositif selon la revendication 11, **caractérisé en ce qu'**il se présente sous la forme d'un support (D₂;D₃) pourvu de moyens d'accrochage (5a,5b,6a,6b,10a,10b,11a,11b; 8a,8b,9) pour les spires d'extrémités des ressorts (R₂;R₃).

14. Dispositif selon la revendication 11, **caractérisé en ce qu'**il se présente sous la forme d'une épingle (D₄) non rectiligne, dont les extrémités sont destinées à être introduites dans les spires d'extrémités des ressorts (R₄).

15. Dispositif selon la revendication 11, **caractérisé en ce qu'**il se présente sous la forme d'une épingle (D₅) en deux parties (12,13) dont les extrémités d'un côté desdites parties sont destinées à être introduites dans les spires d'extrémités des ressorts tandis que leurs autres extrémités libres peuvent être reliées entre elles par un organe d'accrochage (14).

16. Dispositif selon l'une des revendications 11 à 15, **caractérisé en ce qu'**il est métallique et traité thermiquement.

## Patentansprüche

1. Verfahren zur Herstellung von gekrümmten Schraubenfedern, welches von geraden Schraubenfedern ausgeht und während einer thermischen Behandlung insbesondere eine Krümmungsphase der geraden Federn beinhaltet, **dadurch gekennzeichnet, dass** zur Krümmung die Federn, indem ihnen etwa die Form eines Abschnitts einer Schraubenwindung gegeben wird, gebogen festgehalten werden, um ihnen vor den späteren Verarbeitungsvorgängen einen Gegendefekt zu verschaffen.

2. Verfahren nach Anspruch 1, **dadurch gekennzeichnet, dass** die während der Krümmung stattfindende thermische Behandlung einem Vorgang des Entspannungsglühens entspricht.

3. Verfahren nach Anspruch 1 oder 2, **dadurch gekennzeichnet, dass** das Festhalten der Federn in der gebogenen Stellung dadurch erreicht wird, dass diese zumindest an den an ihren äußeren Enden befindlichen Windungen festgelegt werden.

4. Verfahren nach Anspruch 2 oder 3, **dadurch gekennzeichnet, dass** die Glühtemperatur etwa zwischen 350 und 450°C liegt.

5. Verfahren nach einem der Ansprüche 2 bis 4, **dadurch gekennzeichnet, dass** die Dauer der Glühphase in der festgehaltenen Stellung zwischen achtzig und einhundertzwanzig Minuten liegt.

6. Verfahren nach einem der Ansprüche 1 bis 5, **dadurch ge** **kennzeichnet,** dass dem Krümmungsvorgang ein Schleifvorgang der äußeren Windungen der geraden Federn vorausgeht.

7. Verfahren nach einem der Ansprüche 1 bis 6, **dadurch gekennzeichnet, dass** dem Krümmungsvorgang ein erster Heizvorgang der geraden Federn vorausgeht.

8. Verfahren nach Anspruch 7, **dadurch gekennzeichnet, dass** dieser erste Heizvorgang während etwa zwanzig bis vierzig Minuten bei einer Temperatur von etwa 180 bis 220°C stattfindet.

9. Verfahren nach einem der Ansprüche 1 bis 8, **dadurch gekennzeichnet, dass** der Krümmungsvorgang entsprechend der aufeinander folgenden Vorgänge vervollständigt wird: Kugelstrahlen unter Vorspannung, Erwärmung und Festlegung mit nebeneinanderliegenden Windungen und unter Wärme, Kontrolle der Tarierung der Momente.

10. Verfahren nach Anspruch 9, **dadurch gekennzeichnet, dass** es durch Aufbringung einer korrosionsverhütenden Beschichtung vervollständigt wird.

11. Vorrichtung zur Durchführung eines Verfahrens nach den Ansprüchen 1 bis 10, **dadurch gekennzeichnet, dass** sie als Festlegemittel zumindest die äußeren Windungen der Federn aufweist, wobei die Festlegemittel dazu vorgesehen sind, eine verschobene Festlegung der Windungen während der Krümmung zu gewährleisten, um den Federn etwa die Form eines Abschnitts einer Schraubenwindung zu geben.

12. Vorrichtung nach Anspruch 11, **dadurch gekennzeichnet, dass** sie in Form eines ringförmigen, zylindrischen Gehäuses (D₁) vorgesehen ist, in welches jede Feder (R₁), um im wesentlichen über ihre gesamte Länge gebogen gehalten zu sein, eingeführt wird, während eine Einrichtung (4) dafür vorgesehen ist, wenigstens die Verschiebung der äußeren Windungen zu gewährleisten.

13. Vorrichtung nach Anspruch 11, **dadurch gekennzeichnet, dass** sie in Form einer Stützeinrichtung (D₂; D₃) vorgesehen ist, die mit Mitteln zur Mitnahme (5a, 5b, 6a, 6b, 10a, 10b, 11a, 11b; 8a, 8b 9) der äußeren Windungen der Federn (R₂; R₃) versehen ist.

14. Vorrichtung nach Anspruch 11, **dadurch gekennzeichnet, dass** sie in Form einer nicht geradlinigen Nadel (D₄) vorgesehen ist, deren äußere Enden zum Eingriff in die äußeren Windungen der Federn (R₄) vorgesehen sind.

15. Vorrichtung nach Anspruch 11, **dadurch gekennzeichnet, dass** sie in Form einer Nadel (D₅) in zwei Abschnitten (12, 13) vorgesehen ist, wobei die äußeren Enden der einen Seite der Abschnitte zum Eingriff in die äußeren Windungen der Federn vorgesehen sind, während die anderen, freien Enden durch ein Mitnahmeelement (14) miteinander verbunden werden können.

16. Vorrichtung nach einem der Ansprüche 11 bis 15, **dadurch gekennzeichnet, dass** diese metallisch und thermisch behandelt ist.

## Claims

1. Method for production of curved coil springs from straight coil springs and comprising notably a phase in which said straight springs are bent during a heat treatment, **characterised in that** for the bending operation the springs are held curved giving them substantially the shape of a portion of a turn of a helix to produce a counter-defect in the spring before the later finishing operations.

2. Method according to claim 1, **characterised in that** the heat treatment carried out during the bending operation corresponds to a stress-relieving annealing operation.

3. Method according to one of claims 1 and 2, **characterised in that** the springs are held in the curved position by immobilising at least the end turns of said springs.

4. Method according to one of claims 2 and 3, **characterised in that** the annealing temperature is approximately 350 to 450°C.

5. Method according to one of claims 2 to 4, **characterised in that** the duration of the annealing phase in the held position is approximately 4 to 120 minutes.

6. Method according to one of claims 1 to 5, **characterised in that** the bending operation is preceded by an operation in which the end turns of the straight springs are ground.

7. Method according to one of claims 1 to 6, **characterised in that** the bending operation is preceded by a first operation in which the straight springs are heated.

8. Method according to claim 7, **characterised in that** this first heating operation is carried out at a temperature of approximately 180 to 220°C for approximately 20 to 40 minutes.

9. Method according to one of claims 1 to 8, **characterised in that** the bending operation is completed by the following successive operations: pre-stressing shot blasting, heating and immobilisation with the turns joined together and hot, checking of the calibration torques.

10. Method according to claim 9, **characterised in that** it is completed by an anti-corrosion coating operation.

11. Device for implementation of the method according to one of claims 1 to 10, **characterised in that** it comprises means for immobilising at least the end turns of the springs, designed to ensure offset immobilisation of said turns during the bending operation to give the spring substantially the shape of a portion of a turn of a helix.

12. Device according to claim 11, **characterised in that** it takes the form of a cylindrical annular housing (D₁) in which each spring (R₁) is introduced to be held bent over substantially its entire length, whereas a means (4) is provided to ensure that at least the end turns are offset.

13. Device according to claim 11, **characterised in that** it takes the form of a support (D₂; D₃) provided with attachment means (5a, 5b, 6a, 6b, 10a, 10b, 11a, 11b; 8a, 8b, 9) for the end turns of the springs (R₂; R₃).

14. Device according to claim 11, **characterised in that** it takes the form of a pin (D₄) which is not straight, the ends of which are designed to be introduced in the end turns of the springs (R₄).

15. Device according to claim 11, **characterised in that** it takes the form of a pin (D₅) in two portions (12, 13) of which the ends on one side of said portions are designed to be introduced into the end turns of the springs while their other free ends can be connected to one another by an attachment member (14).

16. Device according to one of claims 11 to 15, **characterised in that** it is metal and heat treated.
